(19) Europäisches Patentamt / European Patent Office / Office européen des brevets

(11) **EP 3 465 127 B1**

(12) **EUROPEAN PATENT SPECIFICATION**

(45) Date of publication and mention
of the grant of the patent:
**13.07.2022 Bulletin 2022/28**

(21) Application number: **17727824.9**

(22) Date of filing: **22.05.2017**

(51) International Patent Classification (IPC):
**G05B 23/02** *(2006.01)*    **G01M 13/045** *(2019.01)*

(52) Cooperative Patent Classification (CPC):
**G05B 23/0235; G01M 13/045**

(86) International application number:
**PCT/EP2017/062227**

(87) International publication number:
**WO 2017/202753 (30.11.2017 Gazette 2017/48)**

(54) **METHOD AND SYSTEM TO MONITOR THE HEALTH STATUS OF A ROLLING BEARING OF A MACHINERY, AND MACHINERY EQUIPPED WITH SAID SYSTEM**

VERFAHREN UND SYSTEM ZUR ÜBERWACHUNG DES GESUNDHEITSZUSTANDES EINES WÄLZLAGERS EINER MASCHINENANLAGE UND MIT DEM SYSTEM AUSGESTATTETE MASCHINE

PROCÉDÉ ET SYSTÈME DE SURVEILLANCE D'ÉTAT DE SANTÉ DE PALIER À ROULEMENT DE MACHINERIE, ET MACHINERIE ÉQUIPÉE DUDIT SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2016 IT UB20163745**

(43) Date of publication of application:
**10.04.2019 Bulletin 2019/15**

(73) Proprietor: **Nuovo Pignone Tecnologie S.r.l.**
**50127 Florence (IT)**

(72) Inventors:
 • **SEPE, Marzia**
  **50127 Florence (IT)**
 • **GARBIN, Riccardo**
  **50127 Florence (IT)**
 • **DATCHANAMOORTHY, Senthilkumar**
  **Karnataka 560066**
  **Bangalore (IN)**

 • **YOGANATHA BABU, Ravi**
  **Karnataka 560066**
  **Bangalore (IN)**
 • **REDDY, Vinod**
  **Karnataka 560066**
  **Bangalore (IN)**
 • **REVEILLE, Gilbert Scott**
  **West Chester, Ohio 45069-4846 (US)**
 • **RAO, Kotesh Kummamuri**
  **Houston, Texas 77015 (US)**

(74) Representative: **Novagraaf Group et al**
  **Chemin de l'Echo 3**
  **1213 Onex/ Geneva (CH)**

(56) References cited:
  **EP-A1- 2 365 310        EP-A1- 3 019 845**
  **WO-A1-2015/015987    US-A1- 2010 071 469**
  **US-B2- 9 032 803**

**Description**

TECHNICAL FIELD

Embodiments of the subject matter disclosed herein correspond to a method to monitor the health status of a rolling bearing of a machinery, to a system to monitor the health status of a rolling bearing of a machinery and to a machinery equipped with said system.

In particular, the machinery may be a turbomachinery.

BACKGROUND

In the field of 'Oil and Gas', as well as in the field of 'Power', machinery like compressor or turbomachinery in general are widely used.

Those kinds of machineries comprise rotating parts, like shafts, that may be mounted on rolling bearings. Rolling bearings comprise a plurality of rolling elements, which may be balls or cylinders, located between an outer ring and an inner ring. The rolling elements may rotate on an inner race and an outer race respectively formed on the inner ring and on the outer ring.

In order to lubricate and refrigerate the bearings, the machinery may be equipped with a lubricating circuit, feeding lubricant to the each bearing. The lubricant draining from the bearing may gather in a sump structure surrounding the bearing and then may be recirculated in the lubricating circuit.

Rolling bearing faults or malfunctioning may lead to serious damages, especially in turbomachines. Here, impellers or turbines are mounted on the shaft with a minimal distance from a stator, in order to operate correctly and efficiently. If a rolling bearing breaks, impellers and other rotating components may contact the stator leading to a severe damage of the entire machinery.

As bearing health is so critical, different systems are used to monitor the health of a rolling bearing.

EP 3 029 449 A1 discloses a wind power generation facility with a main-shaft bearing device having a vibration sensor.

When a rolling bearing is damaged, its temperature increases. In addition, a damaged bearing may generate important vibrations that may add on to the vibration of the whole machinery. Moreover, wear and tear in the bearing can cause small metal chips to break (in particular races and rolling parts) and may flow in the lubricating circuit together with the lubricating fluid.

Baseline values of healthy systems are used to monitor the bearing temperature, overall machinery vibration and the quantity of chips present in the scavenge line of the lubricating circuit.

The values of monitored parameters may change significantly only when the bearing is severely damaged.

Therefore, the known monitoring systems may not be able to correctly diagnose a rolling bearing problem at an initial stage of bearing malfunction.

SUMMARY

The present invention is defined by the accompanying claims.

Therefore, there is a general need for an improved method and system to monitor the health status of a rolling bearing of a machinery.

The method and system are particularly useful when implemented on turbomachinery. An important idea is to monitor the health status of a rolling bearing acquiring a first signal collected by a vibration sensor installed on the machinery, and filter it with a filtering algorithm that removes from the signal the vibration produced by parts of the machinery different from that generated by the monitored bearing.

First embodiment of the subject matter disclosed herein corresponds to a method that monitors the health status of a rolling bearing, as defined by appended claim 1.

Second embodiment of the subject matter disclosed herein corresponds to a system that monitors the health status of a rolling bearing, as defined by appended claim 14.

Third embodiment of the subject matter disclosed herein corresponds to a machinery, in particular a turbomachinery, equipped with a system to monitor the health status of a rolling bearing, as defined by appended claim 15.

BRIEF DESCRIPTION OF DRAWINGS

The accompanying drawings, which are incorporated herein and constitute a part of the specification, illustrate exemplary embodiments of the present invention and, together with the detailed description, explain these embodiments. In the drawings:

Fig. 1 schematically shows a machinery, and in particular a part of a turbomachinery that comprises a compressor and a turbine in the proximity of a burner;

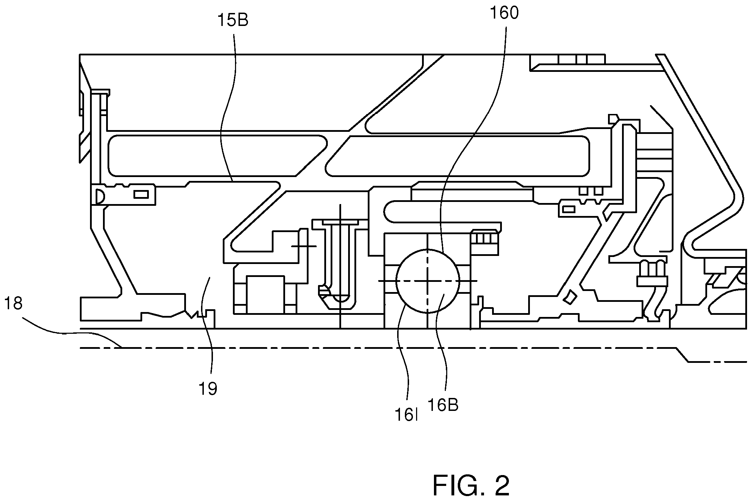

Fig. 2 is an enlarged view of a particular of Fig. 1, that shows the bearing in detail;

Fig. 3 is a schematic view of a plurality of steps of a method to monitor the health status of a rolling bearing, for example, of the rolling bearing shown in Fig. 2;

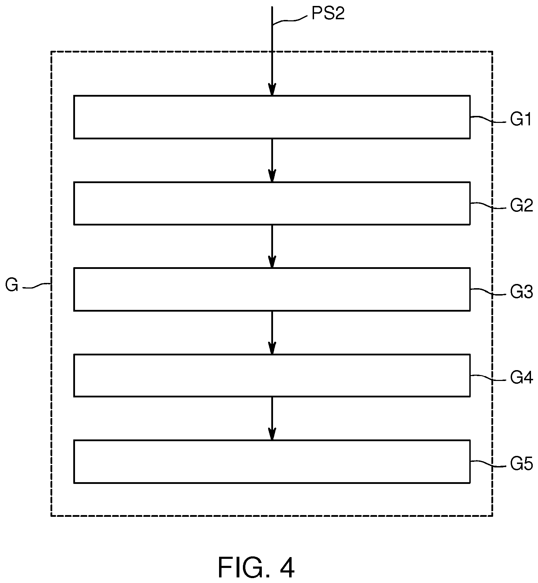

Fig. 4 is a schematic view of further steps of the method of Fig. 3; and

Fig. 5 is a schematic view of a plurality of steps relating to a different embodiment of a method to monitor the health status of a rolling bearing, for example, the rolling bearing shown in Fig. 2

DETAILED DESCRIPTION

The following description of exemplary embodiments refers to the accompanying drawings.

The following description does not limit the invention. Instead, the scope of the invention is defined by the appended claims.

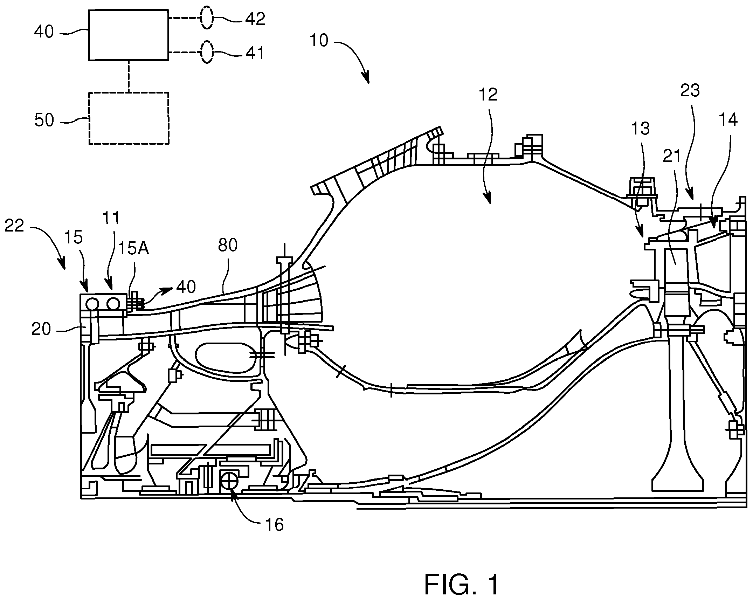

With particular reference to Fig. 1, reference 10 overall indicates a machinery, in particular a turbomachinery, and more in particular a gas turbine.

The turbomachinery 10 may comprise an axial air compressor 22 driven by a turbine 23. The compressor 22 may comprise a plurality of compressor blades 20, and the turbine may comprise a plurality of turbine blades 21. Both the compressor 22 and the turbine 23 may comprise a plurality of compressor or turbine stages (not shown in the drawings). The compressor blades 20 and the turbine blades 21 are mounted on a common shaft 18.

The turbine blades 21 shown in Fig. 1, may cooperate with turbine nozzles 13 and stator nozzles 14 in order to operate correctly.

The shaft 18 may be supported by a rolling bearing 16 located between the axial compressor 22 and the turbine 23 and by a further bearing (not shown) located at an inlet of the axial compressor 22, in the proximity of a burner 12. Other bearings (not shown) may support the shaft 18.

The rolling bearing 16 may be refrigerated and lubricated by oil flowing in a scavenge line 19 in fluid contact with the rolling bearing 16.

The bearing may also comprise an outer race 16O, which may be coupled to a stator, and an inner race 16I, which may be coupled to the shaft 18. Between the inner race 16I and the outer race 16O a plurality of bearing balls 16B is located.

A vibration sensor 11 is mounted on an outer casing 80 of the machinery. The vibration sensor 11 may be mounted on a compressor rear stator assembly 15, in the proximity of the compressor rear frame. The vibration sensor 11 monitors the health status of the rolling bearing 16.

As it may be noticed, the position of the vibration sensor 11 is distant from the turbine bearing 16, so that it may be easier to access it in case of maintenance. In the present description, the term 'distant' should be interpreted as 'not in direct contact' with any part of the bearing 16.

By way of example the sensor 11, located on the casing 80 of the machinery, may be preferably on an external flange 15A of it.

According to one embodiment, the vibration sensor 11 may be an accelerometer having a wide bandwidth with upper cut-off frequency >10 kHz in order to capture all the spectral components of the vibrations generated by a possible malfunction of the bearing 16.

As an example the accelerometer 11, may be of piezoelectric type or of the acoustic type, as well as piezo-resistive, capacitive, MEMS or strain gauge type.

The vibration sensor 11 may transmit a signal S1 to a machinery control unit 40 coupled to it. The machinery control unit 40 is also coupled with a speed sensor 41 designed to read the rotating speed of the shaft 18. The speed sensor 41 may be of any known type, for example a keyphasor, a hall effect sensor, a stroboscope sensor etc. The control unit 40 may also be coupled with a monitor 50 (for example a touch screen video or a control panel of the machinery), which may show alerts and/or any other kind of information for controlling the operating status of a machinery. Furthermore the control unit may be coupled with a debris sensor 42 placed in the scavenge line 19.

The control unit 40 may be configured to monitor the health status of the rolling bearing 16 based on the signal S1 acquired by the vibration sensor 11, and the shaft speed value measured by the speed sensor 41.

In the present description, reference will be made to the steps necessary to monitor the rolling bearing 16, although the machinery may have other vibration sensors positioned on the machinery to monitor the status of other rolling bearings. Furthermore the control unit 40, may show on the monitor 50, the information regarding the health status of the rolling bearing 16, obtained on the basis of the signal collected by the vibration sensor 11, and the signal acquired by the speed sensor. More in particular, the information regarding the health status may relate to a damage present on the inner race of the bearing, on the outer race of the bearing, or on the bearing ball. An alarm may be also generated and displayed on the monitor 50.

3

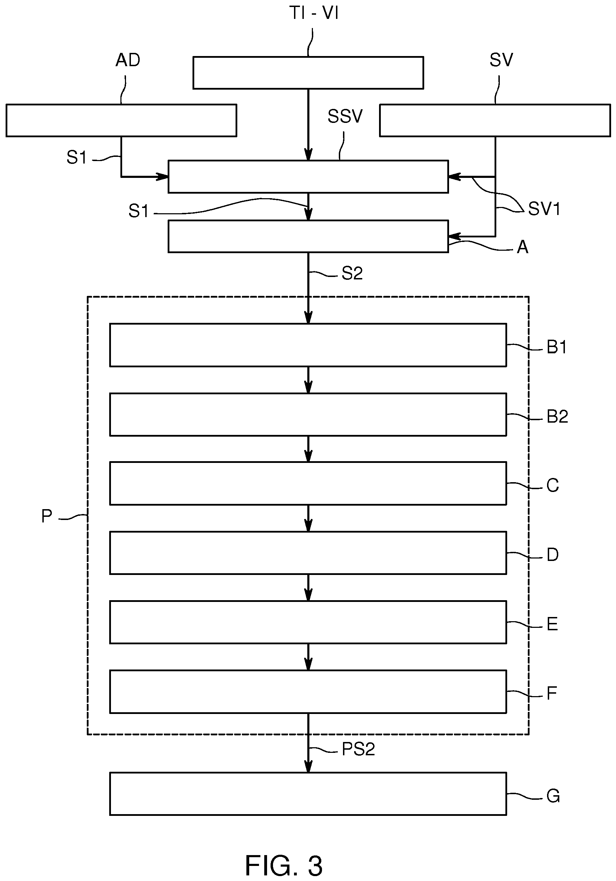

The method performed by the control unit 40 comprises the following steps (reference is made to Fig. 3):

a. a first acquiring step SV with a speed sensor 41 of a rotation speed value SV1 of the shaft 18 coupled to the rolling bearing 16,

b. a second acquiring step AD of a first signal S1 acquired by a vibration sensor 11 located on the machinery 10 mounted in a position distant from the rolling bearing 16 on an outer casing 80 of the machinery 10, and

c. a first calculating step SSV, to verify if a variation of the shaft rotation speed during a predetermined time interval TI falls within a predetermined variation interval VI, and if the variation falls within the predetermined interval TI,

d. performing a first filtering step A of the first signal with a first algorithm based on a vibration produced by parts of the machinery different from the bearing at the said rotation speed value SV1,

so as to obtain a second signal S2 representative of a bearing health status.

By way of example, the first calculating step SSV may proceed with the algorithm if the speed variation within TI is below a predefined threshold. In a numeric example, the parameter VI may be set to 0.2 shaft revolutions, while the time interval TI may be 1 second.

The first filtering step A may operate with the following algorithm;

A1. transform the first signal S1 from the time domain to the frequency domain (for example by calculating the Fast Fourier Transform (FFT) of first signal S1, or by any other known method) and

A2. cancel vibrations produced for example by the shaft 18 and the machinery parts rotating with the shafts (for example: frequency components $N*fsh \pm I$ Hz, where fsh is the shaft speed SV1 in rev/sec and I is a parameter that may be fixed or dependent from N),

A3. optionally transform the processed signal back to time domain (for example again with an IFFT)

so as to obtain a second signal S2.

As an example the parameter I, may be 3Hz. In another example the parameter I may be I=f(N). Specifically, the parameter I may be used to take into account the spread of the shaft order components occurring due to computational inaccuracy related to finite order of the Fast Fourier Transform.

The filtering step A may give as an output a second signal S2 that may be further processed by a first processing step P to obtain a third signal PS2 representative of a bearing health status.

The first processing step P may comprise a first amplification step B1 to amplify frequencies with periodic behavior of the second signal S2 thereby reducing noise.

This first amplification step B1 may be performed with spectral averaging techniques, for example with the following procedure:

B1-1. perform a segmentation of the signal S2, preferably applying an overlap O (in one example the overlap O may be of 40 percent)

B1-2. transform each segment of the signal from the time domain to the frequency domain (for example by calculating the Fast Fourier Transform (FFT), or by any other known method) and

B1-3. estimate P1th percentile of magnitude of signal spectrum (for example P1 - 50th percentile)

B1-4. replace the frequency domain magnitude of each segment by P1th percentile magnitude

B1-5. transform the processed signal back to time domain (for example again with an IFFT) processed

B1-6. reconstruct the signal by overlap and add method.

The value of P1th may be selected based on the variation of the strength of the signal across different segments. If the signal strength is consistent across 50 percent of the segments, then 50th percentile may be selected.

The first processing step P may also comprise a first normalization step B2, to regulate the strength of the different frequency components across different frequency bands. This step may be particularly useful for the identification of a bearing defect.

The first normalization step B2 may be performed, as an example, by the following procedure:

B2-1. transform the signal from the time domain to the frequency domain (for example by calculating the Fast Fourier Transform (FFT) of first signal S1, or by any other known method)

B2-2. find peak magnitude for every frequency band, of a predetermined frequency FR (for example FR may be 1400 Hz, but the value of FR may be set to the expected ball pass frequency calculated theoretically).

B2-3. interpolate the peak values to get the division factor for normalizing the signal.

B2-4. divide each component in the frequency domain by the factor obtained by interpolation of peak values

B2-5. transform the processed signal back to time domain (for example again with an IFFT)

The first processing step P may also comprise a second filtering step C performed with a pass-band algorithm, which may be performed, by way of example, with the following procedure:

C-1. choose band pass filter specifications such that it will cover all the fault frequency components and reject all other frequency bands;

C-2. apply band pass filter on the vibration signal.

The first processing step P may further comprise a second amplification (step D) to amplify impulsive components of the signal. The second amplification step may be for example a blind deconvolution.

By way of example, the second amplification step D may be performed by the following procedure:

D-1. choose filter length FL (which may be between 1 and 2 times the decay time constant of the impulsive fault signature).

D-2. calculate autocorrelation values for shifts 0,1,... ,FL-1.

D-3. Calculate weighted toeplitz autocorrelation matrix and find its inverse (A_inv).

D-4. initialize filter with coefficients (0,1,0,0,....,0).

D-5. apply filter on the input signal x and get the output signal y.

D-6. calculate weighted cross-correlation vector by shifting the input signal from 0 to FL-1.

D-7. update the filter coefficients: f = A_inv*Weighted_Cross_Corr_Vect.

D-8. repeat steps D-5 to D-7 until max iterations or the kurtosis of y is constant.

The first processing step P may also comprise a first signal decomposition step E, which may be as a way of example a Wavelet Decomposition. It may be performed, as an example, by the following procedure:

E-1. Choose the number of decomposition levels
E-2. Decompose the signal into different frequency ranges based on the decomposition level

The fault signature may be very strong in certain frequency bands and other frequency bands may have higher noise. After decomposition, the fault signature may be present in more than one decomposed signal. Hence, all decomposed signals are checked for the presence of fault components.
The first processing step P may also comprise a first envelope spectral analysis F. It may be performed on each decomposed signal, as an example, by the following procedure:

F-1. apply band pass filter on each wavelet decomposed signal in the previous step

F-2. rectify the signal to get the envelope.

F-3. divide the signal into a number (for example 4) of segments and calculate FFT of each segment.

F-4. check each FFT magnitude variation among different segments and suppress the component that shows variation greater than a threshold (for example 20%).

The steps discussed above that are part of the first processing step P, may be performed in any sequence. The sequence may also exclude the first normalization step B2 when trying to detect a defect on the outer race of the bearing, or any other step.

After processing the second signal S2 as above described, thereby obtaining a third signal PS2, a second processing step G may be performed, in order to detect the presence of defect pattern in the signal related to a bearing malfunction.

The third signal PS2 is processed through one or more of the followings steps, preferably in sequence.

G1. Find Threshold and Apply (by smoothing of spectrum)

This step may be performed by the following sub-steps:

G-1a. Smooth the envelope spectrum, for example using approaches like moving average or local regression.

G-1 b. Select a dynamic threshold based on the noise level of the envelope spectrum. Typically, the threshold may be 2 to 3 times the average noise level obtained after smoothing the envelope spectrum.

G-1 c. Apply the threshold and exclude the components below the threshold.

G2. Filter out shaft order components (where shaft components are known because shaft speed is an input parameter).

This step may be performed by cancelling vibrations produced by the shaft 18 and the machinery parts rotating with the shafts (for example: frequency components $N*fsh \pm Ie$ Hz, where fsh is the shaft speed SV1 in rev/sec and Ie is a parameter with a fixed value, or a value dependent from the shaft speed),

G3. Noise Removal (to retain only the strong components of the signal)

This step may be performed by excluding the weak frequency components and retaining only 3 to 5 percent of the strong components

G4. Find Peak

It may be performed by finding the frequency corresponding to each of the strong peaks or components identified above.

G5. Categorize Peak as BPFO/BPFI

It may performed by the following procedure:

G5-a. For each peak closer to the theoretical frequency of the outer race defect, check for the presence of harmonics. If the peak and its harmonic is present then categorize as outer race defect.

G5-b. For each peak closer to the theoretical frequency of the inner race defect, check for the presence of harmonics and side bands at multiples of shaft speed. If the peak and its harmonic and/or sidebands are present then categorize as inner race defect.

The steps discussed above that are part of the second processing step G, may be performed in any sequence. The sequence may also exclude one or more of the steps, or include steps not described.

If during the above described procedure, a defect is identified, (i.e. damage present on the inner race of the bearing, or on the outer race of the bearing) an alarm may be generated.

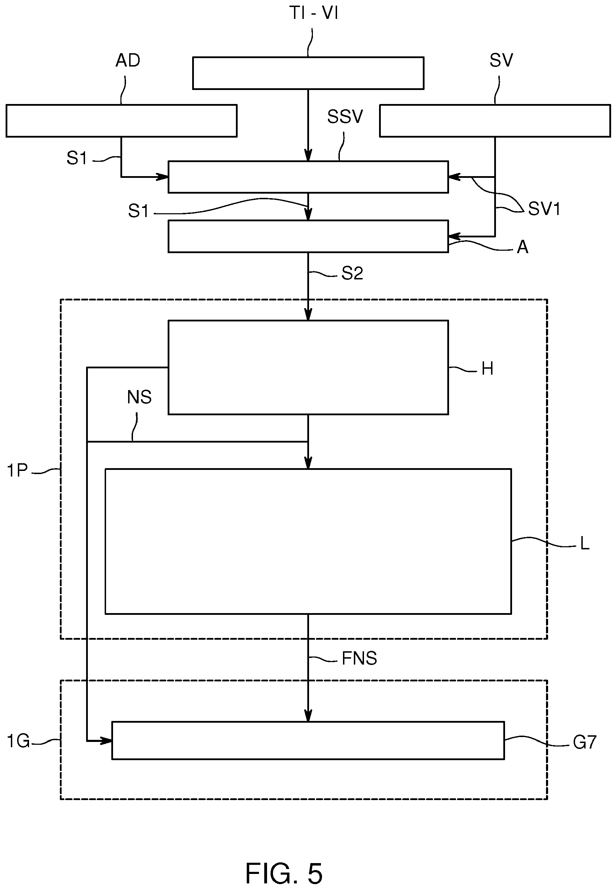

Fig. 5, shows a different embodiment of a method to monitor the health status of a rolling bearing, for example the rolling bearing 16 of fig 1. This embodiment may be particularly useful to detect defects on the balls of the bearing, but it may be also used to detect outer race or inner race defects, using appropriate parameters and frequencies.

The first steps of the method are identical to the ones described with reference to Fig. 3, therefore they will not be described again, and reference is made to the description here above.

In the present embodiment, the first filtering step A, may be slight different from the one previously described, as it may operate with the following algorithm;

A1. transform the signal S1 from the time domain to the frequency domain (for example by calculating the Fast Fourier Transform (FFT) of first signal S1, or by any other known method) and

A2. cancel vibrations produced for example by the shaft 18 and the machinery parts rotating with the shafts (for example: frequency components $N*fsh \pm I$ Hz, where fsh is the shaft speed SV1 in rev/sec and I is a parameter that may be fixed or dependent from N),

The filtering step A may give as an output a second signal S2 in the frequency domain, which may be further processed by a first processing step IP to obtain a third signal FNS representative of a bearing health status.

More in particular the first processing step IP may comprise the following steps.

H. Second decomposition step:

the spectrum of the signal S2 may be decomposed into non-overlapping sub-bands, to obtain a plurality of sub-band signals NS. Subsequently, each sub-band signal NS may be observed for the presence of faults, as it will be discussed later.

The bandwidth for each sub-band can be equal to or greater than a multiple (harmonics) of the ball spin frequency *bsf* and its sidebands, for example six harmonics and six sidebands per harmonic.

L. Further step:

for each sub-band signal NS, the frequencies different from multiples of the ball spin frequency *bsf* along with sidebands at multiples of the cage frequency cs are set to zero, in order to get a filtered sub-band signal FNS.

In particular, the further step L, may be performed by creating a vector $\tilde{X}_{bf}$ according to the following compound arithmetic progression:

$$\tilde{X}_{bf} = \begin{cases} X_{bf}, & f = f_{off} + \sum_{m=1}^{M} \left( mf_{bsf} + \sum_{n=-3}^{3} nf_{cg} \right) \\ 0, & otherwise \end{cases}$$

Wherein:

$X_{bf}$ is the original sub band signal NS $f_{off}$ is the frequency offset parameter that identifies the compound arithmetic progression model fit within the sub band under consideration. The search range can be set from the starting frequency of the sub band to the starting frequency plus theoretical BSF.

$f_{bsf}$ is the expected ball spin frequency

$f_{cg}$ is the expected cage frequency

Basically, the vector $\tilde{X}_{hf}$ is constructed varying $f_{bsf}$ and $f_{cg}$ in a range of expected frequencies, obtained from experimental and filed tests.

The steps discussed above that are part of the first processing step 1P, may be performed in any sequence. The sequence may also exclude one or more of the steps, or include steps not described.

After the first processing step IP, a second processing step 1G may be performed on each third signal FNS.

In the second processing step 1G, each filtered sub-band signal (which may be the vector $\tilde{X}_{bf}$) may be compared with the original sub-band signal NS (which may be the vector $X_{bf}$), in order detect the presence of the defect pattern.

The comparison may be performed by calculating the value of $\rho$ as defined below.

$$\rho\left(f_{off}, f_{bsf}, f_{cg}\right) = \frac{||\tilde{X}_{bf}||^2}{||X_{bf} - \tilde{X}_{bf}||^2}$$

If $\rho$ is greater than a dynamic threshold calculated on the basis of different parameters of the signal (for example the signal energy, Kurtosis, RMS etc.) the defect pattern may be detected.

When a defect pattern is detected, all or some of the preceding steps already discussed for the previous embodiment, may be performed.

The steps discussed above that are part of the second processing step 1GP, may be performed in any sequence. The sequence may also exclude one or more of the steps, or include steps not described.

When applying the procedure described for this embodiment, to the identification of defects that may be present on the inner race or on the outer race, a slightly different approach may be used in the construction of the vector $\tilde{X}_{bf}$, which may be based on expected frequencies relating to the inner or outer race, and/or on the expected cage frequency.

If, through one of the method described above, a defect on the bearing (defect pattern) is identified, it is possible to further asses the total debris mass present in an oil scavenge line coupled to the bearing 16, through the debris sensor 42 placed in the scavenge line 19. The total debris mass may correspond to the metal that detached from either one of the bearing ball, cage, inner race, outer race, and seals etc.

As a further step, it is also possible to estimate a propagation of the bearing defect over the time, in order to estimate the bearing residual life.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment,

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the broadest interpretation of the appended claims so as to encompass all such modifications, changes, and omissions.

**Claims**

1. A method to monitor the health status of a rolling bearing (16) of a machinery (10), comprising:

   a. a first acquiring step (SV) with a speed sensor (41) of a rotation speed value (SV1) of a shaft (18) coupled to the rolling bearing (16),
   b. a second acquiring step (AD) of a first signal (S1) generated by a vibration sensor (11) located on the machinery (10) in a position distant from the rolling bearing on an outer casing (80) of the machinery (10), and
   c. a first calculating step (SSV) of a variation of the shaft rotation speed value during a predetermined time interval (TI), and if the calculated variation of the rotation speed falls within a predetermined variation interval (VI),
   d. a first filtering step (A) of the first signal (S1) with a first algorithm based on a vibration produced by parts of the machinery different from the bearing at the said rotation speed value (SV1),

   so as to obtain a second signal (S2) representative of a bearing health status.

2. The method of claim 1, comprising a first processing step (P, 1P) of the second signal (S2) so as to obtain a third signal (PS2, PNS) representative of the bearing health status.

3. The method of claim 2, comprising a second processing step (G, 1G) of the third signal (PS2, PNS) to detect the presence of a defect pattern related to a bearing malfunction.

4. The method of claim 2, wherein at least one of the first processing step (P) comprises a first amplification step (B1) to amplify frequencies with periodical behavior of the second signal (S2) thereby reducing noise and wherein the first processing step (P) comprises a first normalization step (B2) to regulate the strength of the different frequency components across different frequency bands, and wherein the first processing step (P) comprises a second amplification step (D) to amplify impulsive components of the second signal (S2), and wherein the first processing step (P) comprises a second filtering step (C) performed with a pass-band algorithm and a first signal decomposition step (E) and/or a first envelope spectral analysis (F).

5. The method of claim 3, wherein the second processing step (G) comprises a first analyzing step (G5) wherein signal peaks are compared to known signal peaks, to detect the presence of a defect pattern related to a bearing malfunction.

6. The method of any preceding claim, wherein known signal peaks comprise at least one of a group of signal peaks representative of a defect on an outer race of a bearing, a group of signal peaks representative of a defect on an inner race of a bearing, and a group of signal peaks representative of a defect on at least a ball of a bearing.

7. The method of claim 6, wherein the known signal peaks are obtained from the analysis of malfunctioning bearing from an experimental setup or experimental field.

8. The method of claim 3, wherein the second processing step (G) comprises at least one of a filtering step (G1) to find threshold and apply by smoothing spectrum, a filtering step (G2) to cancel shaft order components, a noise removal step (G3) to retain only strong components of the signal, and an analyzing step to find signal peaks (G4).

9. The method of claim 2, wherein the first processing step (1P) comprises at least one of a second decomposition step (H) to decompose the second signal (S2) in non-overlapping sub-bands signal (NS) in the domain of frequency, a further step (L) to set to zero, for each sub-band signal (NS), the frequencies different from multiples of the expected ball spin frequency along with sidebands at multiples of the expected cage frequency in order to get a filtered sub-band signal (FNS) and to set to zero, for each sub-band signal (NS), the frequencies different from multiples of the expected inner or outer race frequency, and/or of the expected cage frequency.

10. The method of claim 9, wherein the second processing step (1G) comprise third analyzing step (G7) to compare each filtered sub-band signal (FNS) with the sub-band signal (NS) in order detect the presence of the defect pattern.

11. The method of claim 3, comprising a step of generating an alarm if the defect pattern is detected.

12. The method of claim 3, comprising the step of assessing the total debris mass present in an oil scavenge line coupled to the bearing (16) if a defect pattern is detected, and further to estimate asses a propagation of the defect over the time.

13. The method of any preceding claim, wherein the vibration sensor (11) is an accelerometer, preferably of the type piezo-resistive and/or piezo-electric and/or capacitive and/or MEMS and/or of the strain gauge type, and/or wherein the vibration sensor (11) is located on a sump/bearing assembly and/or wherein the vibration sensor (11) is located on a casing of the machinery (10) preferably on an external flange (15A), and/or wherein the first filtering step (A) is based on a vibration produced by a machinery with healthy bearing, and/or wherein the machinery is a turbomachinery.

14. A rolling bearing monitoring system comprising a vibration sensor (11) to monitor vibrations generated at least by said bearing (16), a processing unit (40) configured to process a signal (S1) acquired from the vibration sensor (11), the processing unit (40) being configured to perform the steps of one or more of the preceding claims.

15. A machinery, in particular a turbomachinery, comprising a casing (80) housing a shaft (18) supported by at least a rolling bearing (16) and a rolling bearing monitoring system as defined in claim 14.

## Patentansprüche

1. Verfahren zum Überwachen des Zustands eines Wälzlagers (16) einer Maschine (10), umfassend:

   a. eine erste Erfassungsstufe (SV) mit einem Drehzahlsensor (41) eines Drehzahlwerts (SV1) einer Welle (18), die mit dem Wälzlager (16) gekoppelt ist,
   b. einen zweiten Erfassungsschritt (AD) eines ersten Signals (S1), das von einem Schwingungssensor (11) erzeugt wird, der sich an der Maschine (10) in einer vom Wälzlager entfernten Position an einem Außengehäuse (80) der Maschine (10) befindet, und
   c. einen ersten Berechnungsschritt (SSV) einer Variation des Wellendrehzahlwerts während eines vorbestimmten Zeitintervalls (TI), und wenn die berechnete Variation der Drehzahl innerhalb eines vorbestimmten Variationsintervalls (VI) fällt,
   d. einen ersten Filterschritt (A) des ersten Signals (S1) mit einem ersten Algorithmus basierend auf einer Vibration, die von anderen Maschinenteilen als dem Lager bei dem Drehzahlwert (SV1) erzeugt wird,

   sodass ein zweites Signal (S2) erhalten wird, das für den Zustand des Lagers repräsentativ ist.

2. Verfahren nach Anspruch 1, umfassend einen ersten Verarbeitungsschritt (P, 1P) des zweiten Signals (S2), sodass ein drittes Signal (PS2, PNS) zum Erhalten des Lagerzustands erhalten wird.

3. Verfahren nach Anspruch 2, umfassend einen zweiten Verarbeitungsschritt (G, 1G) des dritten Signals (PS2, PNS), um das Vorhandensein eines Fehlermusters in Bezug auf eine Lagerstörung zu erkennen.

4. Verfahren nach Anspruch 2, wobei mindestens einer des ersten Verarbeitungsschritts (P) einen ersten Verstärkungsschritt (B1) umfasst, um Frequenzen mit periodischem Verhalten des zweiten Signals (S2) zu verstärken und dadurch Rauschen zu reduzieren, und wobei der erste Verarbeitungsschritt (P) einen ersten Normalisierungsschritt (B2) umfasst, um die Stärke der verschiedenen Frequenzkomponenten über verschiedene Frequenzbänder zu regulieren, und wobei der erste Verarbeitungsschritt (P) einen zweiten Verstärkungsschritt (D) umfasst, um impulsive Komponenten des zweiten Signals (S2) zu verstärken, und wobei der erste Verarbeitungsschritt (P) einen zweiten Filterschritt (C) umfasst, der mit einem Durchlassbandalgorithmus und einem ersten Signalzerlegungsschritt (E) und/oder einer ersten Hüllkurvenspektralanalyse (F) durchgeführt wird.

5. Verfahren nach Anspruch 3, wobei der zweite Verarbeitungsschritt (G) einen ersten Analyseschritt (G5) umfasst, wobei Signalspitzen mit bekannten Signalspitzen verglichen werden, um das Vorhandensein eines Fehlermusters in Bezug auf eine Lagerstörung zu erkennen.

6. Verfahren nach einem der vorstehenden Ansprüche, wobei bekannte Signalspitzen mindestens eine aus einer Gruppe von Signalspitzen umfassen, die einen Fehler an einem Außenring eines Lagers darstellen, einer Gruppe von Signalspitzen, die einen Fehler an einem Innenring eines Lagers darstellen, und einer Gruppe von Signalspitzen, die einen Fehler an mindestens einer Kugel eines Lagers darstellen.

7. Verfahren nach Anspruch 6, wobei die bekannten Signalspitzen aus der Analyse eines fehlerhaften Lagers aus einer Versuchsanordnung oder einem Versuchsfeld erhalten werden.

8. Verfahren nach Anspruch 3, wobei der zweite Verarbeitungsschritt (G) mindestens einen von einem Filterschritt (G1), um einen Schwellenwert zu finden und durch Glättung des Spektrums anzuwenden, einem Filterschritt (G2), um Komponenten wellenförmiger Ordnung zu löschen, einen Schritt zur Rauschentfernung (G3), um nur starke Komponenten des Signals zu erhalten, und einen Analyseschritt, um Signalspitzen zu finden (G4), umfasst.

9. Verfahren nach Anspruch 2, wobei der erste Verarbeitungsschritt (1P) mindestens einen zweiten Zerlegungsschritt (H) umfasst, um das zweite Signal (S2) in nicht überlappende Teilbandsignale (NS) im Frequenzbereich zu zerlegen, einen weiteren Schritt (L), um jedes Teilbandsignal (NS) auf Null zu setzen, die Frequenzen, die sich von Vielfachen der erwarteten Kugeldrehfrequenz unterscheiden, zusammen mit Seitenbändern bei Vielfachen der erwarteten Käfigfrequenz auf Null zu setzen, um ein gefiltertes Teilbandsignal (FNS) zu erhalten, und für jedes Teilbandsignal (NS) die Frequenzen, die sich von Vielfachen der erwarteten inneren oder äußeren Lauffrequenz und/oder der erwarteten Käfigfrequenz unterscheiden, auf Null zu setzen.

10. Verfahren nach Anspruch 9, wobei der zweite Verarbeitungsschritt (1G) einen dritten Analyseschritt (G7) umfasst, um jedes gefilterte Teilbandsignal (FNS) mit dem Teilbandsignal (NS) zu vergleichen, um das Vorhandensein des Fehlermusters zu erkennen.

11. Verfahren nach Anspruch 3, umfassend einen Schritt zum Erzeugen eines Alarms, wenn das Fehlermuster erkannt wird.

12. Verfahren nach Anspruch 3, umfassend den Schritt des Bewertens der gesamten Schmutzmasse, die in einer mit dem Lager (16) gekoppelten Ölspülleitung vorhanden ist, wenn ein Fehlermuster erkannt wird, und ferner des Bewertens einer Ausbreitung des Fehlers im Zeitverlauf.

13. Verfahren nach einem der vorstehenden Ansprüche, wobei der Schwingungssensor (11) ein Beschleunigungsmesser ist, vorzugsweise vom Typ piezoresistiv und/oder piezoelektrisch und/oder kapazitiv und/oder MEMS und/oder vom Typ Dehnungsmessstreifen, und/oder wobei der Schwingungssensor (11) an einer Sumpf-/Lageranordnung angeordnet ist und/oder wobei der Schwingungssensor (11) an einem Gehäuse der Maschine (10), vorzugsweise an einem Außenflansch (15A), angeordnet ist, und/oder wobei der erste Filterschritt (A) auf einer Schwingung basiert, die von einer Maschine mit einem intakten Lager erzeugt wird, und/oder wobei die Maschine eine Turbomaschine ist.

14. Wälzlagerüberwachungssystem, umfassend einen Schwingungssensor (11) zum Überwachen von Schwingungen, die mindestens von dem Lager (16) erzeugt werden, eine Verarbeitungseinheit (40), die konfiguriert ist, um ein von dem Schwingungssensor (11) erfasstes Signal (S1) zu verarbeiten, wobei die Verarbeitungseinheit (40) konfiguriert ist, um die Schritte eines oder mehrerer der vorstehenden Ansprüche durchzuführen.

15. Maschine, insbesondere eine Turbomaschine, umfassend ein Gehäuse (80), in dem eine Welle (18) untergebracht ist, die von mindestens einem Wälzlager (16) getragen wird, und ein Wälzlagerüberwachungssystem, wie in Anspruch 14 definiert.

**Revendications**

1. Procédé pour surveiller l'état de santé d'un palier à roulement (16) d'une machinerie (10), comprenant :

    a. une première étape d'acquisition (SV) avec un capteur de vitesse (41) d'une valeur de vitesse de rotation (SV1) d'un arbre (18) couplé au palier à roulement (16),
    b. une seconde étape d'acquisition (AD) d'un premier signal (S1) généré par un capteur de vibration (11) situé sur la machinerie (10) dans une position éloignée du palier à roulement sur un carter extérieur (80) de la machinerie (10), et
    c. une première étape de calcul (SSV) d'une variation de la valeur de vitesse de rotation de l'arbre pendant un intervalle de temps prédéterminé (TI), et si la variation calculée de la vitesse de rotation entre dans un intervalle de variation prédéterminé (VI),
    d. une première étape de filtrage (A) du premier signal (S1) avec un premier algorithme basé sur une vibration produite par des parties de la machinerie différentes du palier à ladite valeur de vitesse de rotation (SV1),

    de sorte à obtenir un deuxième signal (S2) représentatif d'un état de santé du palier.

2. Procédé selon la revendication 1, comprenant une première étape de traitement (P, 1P) du deuxième signal (S2) de sorte à obtenir un troisième signal (PS2, PNS) représentatif de l'état de santé du palier.

3. Procédé selon la revendication 2, comprenant une seconde étape de traitement (G, 1G) du troisième signal (PS2, PNS) pour détecter la présence d'une structure de défaut apparentée à un dysfonctionnement du palier.

4. Procédé selon la revendication 2, dans lequel au moins l'une de la première étape de traitement (P) comprend une première étape d'amplification (BI) pour amplifier des fréquences avec un comportement périodique du deuxième signal (S2) réduisant de ce fait le bruit et dans lequel la première étape de traitement (P) comprend une première étape de normalisation (B2) pour réguler l'intensité des différentes composantes de fréquence sur différentes bandes de fréquences, et dans lequel la première étape de traitement (P) comprend une seconde étape d'amplification (D) pour amplifier des composantes impulsives du deuxième signal (S2), et dans lequel la première étape de traitement (P) comprend une seconde étape de filtrage (C) exécutée avec un algorithme de bande passante et une première étape de décomposition de signal (E) et/ou une première analyse spectrale d'enveloppe (F).

5. Procédé selon la revendication 3, dans lequel la seconde étape de traitement (G) comprend une première étape d'analyse (G5) dans lequel les pics de signal sont comparés à des pics de signal connus, pour détecter la présence d'une structure de défaut apparentée à un dysfonctionnement de palier.

6. Procédé selon l'une quelconque des revendications précédentes, dans lequel des pics de signal connus comprennent au moins l'un d'un groupe de pics de signal représentatifs d'un défaut sur une bague extérieure d'un palier, un groupe de pics de signal représentatifs d'un défaut sur une bague intérieure d'un palier, et un groupe de pics de signal représentatifs d'un défaut sur au moins une bille d'un palier.

7. Procédé selon la revendication 6, dans lequel les pics de signal connus sont obtenus à partir de l'analyse d'un dysfonctionnement de palier à partir d'une installation expérimentale ou d'un champ expérimental.

8. Procédé selon la revendication 3, dans lequel la seconde étape de traitement (G) comprend au moins l'une d'une étape de filtrage (G1) pour trouver le seuil et appliquer par spectre de lissage, d'une étape de filtrage (G2) pour annuler les composantes d'ordre d'arbre, d'une étape d'élimination de bruit (G3) pour ne conserver que des composants forts du signal, et d'une étape d'analyse pour trouver des pics de signal (G4).

9. Procédé selon la revendication 2, dans lequel la première étape de traitement (1P) comprend au moins l'une d'une seconde étape de décomposition (H) pour décomposer le deuxième signal (S2) en signal de sous-bande non chevauchante (NS) dans le domaine de la fréquence, une étape supplémentaire (L) pour mettre à zéro, pour chaque signal de sous-bande (NS), les fréquences différentes des multiples de la fréquence de rotation de bille attendue ainsi que des bandes latérales à des multiples de la fréquence de cage attendue afin d'obtenir un signal de sous-bande filtré (FNS) et pour mettre à zéro, pour chaque signal de sous-bande (NS), les fréquences différentes des multiples de la fréquence de bague intérieure ou extérieure attendue, et/ou de la fréquence de cage attendue.

10. Procédé selon la revendication 9, dans lequel la seconde étape de traitement (1G) comprend une troisième étape d'analyse (G7) pour comparer chaque signal de sous-bande filtré (FNS) avec le signal de sous-bande (NS) afin de détecter la présence de la structure de défaut.

11. Procédé selon la revendication 3, comprenant une étape de génération d'une alarme si la structure de défaut est détectée.

12. Procédé selon la revendication 3, comprenant l'étape d'évaluation de la masse totale de débris présente dans une ligne de récupération d'huile couplée au palier (16) si une structure de défaut est détectée, et pour estimer en outre une propagation du défaut au cours du temps.

13. Procédé selon l'une quelconque revendication précédente, dans lequel le capteur de vibrations (11) est un accéléromètre, de préférence du type piézo-résistif et/ou piézo-électrique et/ou capacitif et/ou MEMS et/ou du type jauge de contrainte, et/ou dans lequel le capteur de vibrations (11) est situé sur un ensemble puisard/palier et/ou dans lequel le capteur de vibrations (11) est situé sur un carter de la machinerie (10) de préférence sur une bride externe (15A), et/ou dans lequel la première étape de filtrage (A) est basée sur une vibration produite par une machinerie avec un palier en bonne santé, et/ou dans lequel la machinerie est une turbomachinerie.

14. Système de surveillance de palier à roulement comprenant un capteur de vibrations (11) pour surveiller les vibrations générées au moins par ledit palier (16), une unité de traitement (40) configurée pour traiter un signal (S1) acquis à partir du capteur de vibrations (11), l'unité de traitement (40) étant configurée pour exécuter les étapes d'une ou plusieurs des revendications précédentes.

15. Machinerie, en particulier une turbomachinerie, comprenant un carter (80) logeant un arbre (18) supporté par au moins un palier à roulement (16) et un système de surveillance de palier à roulement tel que défini dans la revendication 14.

FIG. 1

FIG. 2

FIG. 3

PS2

G1

G2

G

G3

G4

G5

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3029449 A1